# EUROPÄISCHE PATENTSCHRIFT

(11) **EP 2 154 063 B1**
(45) Veröffentlichungstag und Bekanntmachung des Hinweises auf die Patenterteilung: **01.12.2010**
(21) Anmeldenummer: 09009825.2
(22) Anmeldetag: 29.07.2009
(51) Int. Cl.: B63H 1/22, B63H 21/17, B63J 3/00

(54) **Hybride Hilfsantriebsordnung für eine Segelyacht**
Hybrid auxiliary drive assembly for a sailing yacht
Agencement d'entraînement auxiliaire hybride pour un voilier

(30) Priorität: 13.08.2008 DE 102008038896
(43) Veröffentlichungstag der Anmeldung: 17.02.2010
(73) Patentinhaber: Vesting Projektentwicklungs AG, 25870 Norderfriedrichskoog (DE)
(72) Erfinder: Vesting, Rainer, 37073 Göttingen (DE)
(74) Vertreter: Schneider, Peter Christian

(56) Entgegenhaltungen:
- WO-A-02/076823
- DE-A1- 2 943 270
- DE-U1- 29 604 437
- DE-U1-202006 019 909
- US-A- 3 238 911
- US-A- 3 619 632
- US-B1- 6 802 749

## Beschreibung

Die Erfindung betrifft eine hybride Hilfsantriebsanordnung für eine Segelyacht, umfassend
- einen Verbrennungsmotor,
- eine von dem Verbrennungsmotor antreibbare, vorwiegend generatorisch arbeitende, erste elektrische Maschine,
- eine mit der ersten elektrischen Maschine gekoppelte Leistungselektronik,
- einen mit der Leistungselektronik verbundenen elektrischen Energiespeicher,
- eine mit der Leistungselektronik verbundene und mit einem Schiffspropeller gekoppelte, zweite elektrische Maschine, die sowohl motorisch als auch generatorisch betreibbar ist.

### Stand der Technik

DE 296 04 437 U1, welches den nächstliegenden Stand der Technik darstellt, zeigt einen Hybridantrieb für ein Wasserfahrzeug.

Hybride Hilfsantrieb für Segelyachten sind auch aus der DE 41 05 318 A1 bekannt. Sie verwirklichen die im Automobilbau weit verbreitete Idee des so genannten seriellen Hybridantriebs mit Rekuperationsmöglichkeit.

Beim seriellen Hybridantrieb treibt ein Verbrennungsmotor eine vorwiegend generatorisch arbeitende, erste elektrische

Maschine an. Die von der ersten elektrischen Maschine generatorisch erzeugte elektrische Energie wird über eine Leistungselektronik einem elektrischen Energiespeicher zugeführt. Ebenfalls mit der Leistungselektronik verbunden ist eine zweite elektrische Maschine, die in ihrem motorischen Betrieb einen Schiffspropeller als Antriebselement der Segelyacht antreibt.

Für den Rekuperationsbetrieb ist die zweite elektrische Maschine umschaltbar und als Generator betreibbar. Im Fall eines Automobils erfolgt dies üblicherweise während des Abbremsens, wobei kinetische Energie des Kraftfahrzeugs von den Antriebsrädern auf die zweite elektrische Maschine übertragen und dort in elektrische Energie umgewandelt wird. Die erzeugte elektrische Energie wird über die Leistungselektronik dem Energiespeicher zugeführt. Im Fall der Segelyacht kann der Rekuperationsbetrieb deutlich dauerhafter und effizienter erfolgen als beim Automobil. Der primäre Antrieb einer Segelyacht ist nämlich die Windkraft, die über Wechselwirkung mit der Segelfläche für den erwünschten Vortrieb sorgt. Der Schiffspropeller wird dabei entgegen seiner Vortriebsrichtung, d.h. "rückwärts" angeströmt und in Rotationsbewegung versetzt, die auf die als Generator geschaltete zweite elektrische Maschine übertragen wird. Anders als im Fall des Kraftfahrzeugs entsteht hierbei nicht zwingend eine erhebliche Bremswirkung. Die Geschwindigkeit einer Segelyacht ist nämlich im Wesentlichen durch die so genannte Rumpfgeschwindigkeit bauartbedingt beschränkt. Bereits bei moderaten Windstärken ist die auf die volle Segelfläche einwirkenden Windkraft größer als zur Erreichung der Rumpfgeschwindigkeit erforderlich. Die überschüssige Windkraft wirkt sich nicht in weiterer Beschleunigung der Segelyacht sondern lediglich in verstärkter Krängung aus. Um dies zu verhindern wird typischer bereits bei moderaten Windstärken nicht mit voller Segelfläche sondern mit gerefften Segeln gesegelt. Die durch die Rekuperation hervorgerufene Bremswirkung kann daher zumindest bei moderaten bis starken Windstärken weitgehend vernachlässigt werden.

Gleichwohl muss eine gute Segelyacht auch und gerade mit sehr geringen Windstärken zurechtkommen, d.h. Fahrt machen und manövrierbar bleiben. Anderenfalls muss unter Motor gefahren werden, was im Hinblick auf den Energieverbrauch und die Geräuschentwicklung nachteilig ist. Diesem Ziel dient die strömungstechnische Optimierung des Unterwasserschiffes. Hierzu gehört auch der Schiffspropeller. Es sind so genannte Faltpropeller bekannt, die sich bei Rückwarts-Anströmung, d.h. bei normaler Betriebsstellung des Propellers und Vorwärtsfahrt der Yacht, selbsttätig zusammenklappen. Hierzu sind die einzelnen Propellerflügel mit Gelenken versehen, an denen sie im Stillstand des Propellers bei Segelfahrt nach achtern umklappen. Hierdurch verringert sich der durch den Propeller verursachte Strömungswiderstand deutlich. Bei Propellerbetrieb richten sich die Propellerflügel durch die Zentrifugenkraft selbsttätig wieder auf.

Ein Einsatz solcher Faltpropeller in bekannten Hybridantrieben würde jedoch offensichtlich zum Verlust der Rekuperationsmöglichkeit führen.

Aus der DE 75 08 341 U ist eine Vorrichtung zur Stromerzeugung für Segelboote bekannt, die von dem Vorhandensein oder Nichtvorhandensein eines Hilfsmotors völlig unabhängig ist. Hierzu ist ein separater Propeller vorgesehen, dessen Kraftübertragungswelle mit einem Generator verbunden und in einem separat an dem Segelboot montierbaren Wellengehäuse untergebracht und gelagert ist. Eine solche Vorrichtung benötigt nicht nur viel Bauraum und zusätzlichen technischen Aufwand, sondern beeinflusst auch die hydrodynamischen Eigenschaften des Unterwasserschiffs nachteilig. Zudem nutzt dieses Konzept gerade nicht die Rekuperationsmöglichkeit eines seriellen Hybridantriebs.

Aus der WO 02/058990 A1 ist ein Doppelschraubensystem bekannt, bei dem ein hinter dem Ruder angeordneter und "rückwärts" ausgerichteter Generatorpropeller von einem vor dem Ruder angeordneten und "vorwärts" ausgerichteten Antriebspropeller angeströmt wird. Der Generatorpropeller ist mit einem Generator zur Erzeugung elektrischer Energie verbunden. Der Generatorpropeller nutzt dabei den geringen Anteil "verlorene" mechanischer Energie im Totwasser hinter dem Antriebspropeller. Dieser muss daher wesentlich stärker ausgelegt sein als der Generatorpropeller, der ja bei Motorbetrieb nicht bremsend wirken soll. Das System ist daher nur für reine Motorschiffe geeignet. Außerdem sind der erhebliche Bauraumbedarf, der große technische Aufwand und die deutliche Verschlechterung der hydrodynamischen Eigenschaften des Unterwasserschiffs unvermeidbare Nachteile.

Aus der US 3 619 632 A ist ein vergleichbares Doppelschraubensystem mit spezieller Auslegung für Segelyachten bekannt.

Aus der US 6 802 749 B1 ist ein elektrischer Zusatzmotor/Generator für Schiffe bekannt, der bei Bedarf in unterschiedlicher Orientierung über ein externes Gestänge von Deck ins Wasser abgelassen werden und dort je nach Ausrichtung als Motor bei Langsamfahrt, insbesondere beim Manövrieren, oder zur Stromerzeugung genutzt werden kann. Die Handhabung eines solchen Zusatzmotors ist sehr umständlich. Außerdem benötigt er bei Nichtgebrauch erheblichen und auf Segelyachten typischer Weise wertvollen Stauraum. Auch verschlechtert er als nicht in das Gesamtkonzept der Yacht eingepasstes Zusatzelement die hydrodynamischen Eigenschaften des Unterwasserschiffs erheblich. Er ist daher vor allem für Motoryachten sinnvoll, die mit ihren sehr stark ausgelegten Hauptmotoren Schwierigkeiten bei der Langsamfahrt haben.

### Aufgabenstellung

Es ist die Aufgabe der Erfindung, bekannte Hybridantriebe für Segelyachten strömungstechnisch zu optimieren ohne die Fähigkeit zur Rekuperation zu verlieren.

### Darlegung der Erfindung

Diese Aufgabe wird in Verbindung mit den Merkmalen des Oberbegriffs von Anspruch 1 dadurch gelöst, dass der Schiffspropeller als ein bei Propellerstillstand und Anströmung entgegen seiner Vortriebsrichtung selbsttätig zusammenklappender Faltpropeller ausgebildet ist, der an einem Propellersockel angeordnet ist, welcher zwischen einer Antriebsstellung, in der der Faltpropeller bei Vorwärtsfahrt der Segelyacht entgegen seiner Vortriebsrichtung angeströmt wird, und einer um 180° verschwenkten Rekuperationsstellung, in der der Faltpropeller bei Vorwärtsfahrt der Segelyacht in seiner Vortriebsrichtung angeströmt wird, um eine vertikale Sockelachse schwenkbar ist. Als vortriebsrichtung des Propellers wird hier diejenige Richtung bezeichnet, in die der Propeller bei motorischen Vorwärtsbetrieb einen Vortrieb erzeugt. In Antriebsstellung ist dies die VorwärtsFahrtrichtung der Yacht.

Entgegen ihrer oben erläuterten, scheinbar fehlenden Eignung dafür, setzt die Erfindung auf die strömungstechnische Optimierung des Unterwasserschiffes durch Einsatz von Faltpropellern. Um ein Zusammenklappen des Propellers im Rekuperationsbetrieb zu vermeiden, wird erfindungsgemäß vorgeschlagen, den Propeller an einem schwenkbaren Sockel zu montieren. Im Rekuperationsbetrieb kann dieser Sockel um 180° aus der normalen Betriebstellung für Motorantrieb verschwenkt werden, so dass der Propeller bei Segelfahrt entgegen der Fahrrichtung steht und somit "vorwärts", d.h. in seiner Vortriebsrichtung angeströmt wird. Motorischer Betrieb des Propellers in dieser Stellung würde zur Rückwärtsfahrt der Yacht führen.

Auf diese Weise kann auf bewährte Mittel zur strömungstechnischen Optimierung des Unterwasserschiffs zurückgegriffen werden, ohne dass ein wesentlicher Vorteil des Hybridkonzeptes, nämlich die Rekuperation, aufgegeben werden müsste.

Die Erfindung bietet noch weitere Vorteile: Durch die Entkopplung des Hauptgenerators, bestehend aus Verbrennungsmaschine und erster elektrischer Maschine, vom Antrieb, kann der Hauptgenerator an beliebiger Stelle im Schiff platziert werden, insbesondere auch direkt über dem Kiel, wo er als zusätzlicher Ballast wirkt.

Weiter kann die Verbrennungsmaschine wesentlich kleiner als herkömmlich ausgebildet sein, da beim motorischen Antrieb des Schiffes Energie sowohl aus der Verbrennungsmaschine als auch gleichzeitig aus den während der Rekuperation wiederaufgeladenen elektrischen Energiespeichern gezogen werden kann. Dies ermöglicht z.B. auch die Ausbildung der Verbrennungsmaschine als Benzinmotor, der leiser betrieben werden kann als übliche Dieselaggregate. Dies gilt besonders bei gekapselten Motoren.

Schließlich wird durch die Erfindung auch die Effizienz der Rekuperation im Vergleich zu bekannten Wellengeneratoren gesteigert. Schiffspropeller sind nämlich typischerweise strömungstechnisch für den "Vorwärtsbetrieb" optimiert, d.h. sie setzen einer rückwärtigen Anströmung einen minimierten Wasserwiderstand entgegen. Dies reduziert die Rekuperationseffizienz. Bei der Erfindung wird der verschwenkte Propeller im Gegensatz dazu in derjenigen Richtung angeströmt, in der er einen maximalen Wasserwiderstand und folglich eine maximale Rekuperationseffizienz bietet.

Bevorzugte Ausführungsformen der Erfindung sind Gegenstand der abhängigen Ansprüche.

Günstigerweise ist vorgesehen, dass die zweite elektrische Maschine in oder an dem Propellersockel festgelegt ist. Hierdurch wird erreicht, dass die mechanische Verbindung zwischen dem Propeller und der ihn antreibenden bzw. der von ihm angetriebenen, elektrischen Maschine stets unverändert bleibt. Dies ist besonders günstig, da betriebsbedingte Veränderungen der momentenübertragenden Kopplung aufwendige Kupplungsmechanismen erfordern würden. Diese wären im Hinblick auf Bauraum, Gewicht, Kosten, Wartung und Bedienung nachteilig. Andererseits hat die Anordnung der elektrischen Maschine in dem schwenkbaren Sockel keinerlei Nachteile, da die zweite elektrische Maschine lediglich mit der Leistungselektronik verbunden ist. Diese Erfindung erfolgt typischerweise über flexible Leitungsverbindungen. Auch im Fall starrer Leitungsverbindungen ist die Kopplung mit einem schwenkbar angeordneten Element beispielsweise über Bürstenkontakte für den Fachmann problemlos realisierbar.

Die Möglichkeit der effizienten und dauerhaften Rekuperation von kinetischer Energie ermöglicht an Bord einen höheren elektrischen Energieverbrauch ohne dass dafür fossile Energie über die Verbrennungsmaschine eingesetzt oder der elektrische Energiespeicher mit teurem Landstrom aufgeladen werden müsste. Insbesondere wird der vermehrte Einsatz von Komfortgeräten, wie beispielsweise Heizung, Klimaanlage, Wasch- und Spülgeräten etc. möglich. Derartige Komfortgeräte haben typischerweise eine hohe elektrische Leistungsaufnahme. Dies führt bei üblichen Niederspannungs-Bordnetzen, die typischerweise bei 12 Volt betrieben werden, zu sehr hohen Strömen. Bei einer Weiterbildung der Erfindung ist daher vorgesehen, dass die Leistungselektronik mit einem Bordnetz verbunden ist, weiches ein erstes Teilnetz einer ersten, niedrigeren Spannung und ein zweites Teilnetz einer zweiten, höheren Spannung aufweist. Insbesondere kann vorgesehen sein, dass sicherheitsrelevante, elektrische Verbraucher an das erste Teilnetz und vorzugsweise elektrische Komfortverbraucher an das zweite Teilnetz angeschlossen sind. Hierdurch ist zum einem sichergestellt, dass die durch den Betrieb der Komfortgeräte auftretenden Stromstärken gering sind, was dünnere Leitungsquerschnitte und geringe Brandschutzvorkehrungen erlaubt. Andererseits wird durch die Teilung des Bordnetzes auch sichergestellt, dass die sicherheitsrelevanten Einrichtungen, wie beispielsweise Navigation, Funk, Echolot etc. auch noch bei geringsten Ladezuständen der Energiespeicher arbeiten. Zudem können die handelsüblichen Geräte, die für Niederspannungs-Bordnetze ausgelegt sind, verwendet werden. Wie erwähnt, liegt die Spannung des Niederspannungs-Teilbordnetzes bei typischerweise 12 Volt. Die Spannung des Hochspannungs-Teilnetzes kann mehrere 100 Volt betragen.

Weitere Merkmale und Vorteile der Erfindung ergeben sich nachfolgenden, speziellen Beschreibung und den Zeichnungen.

### Kurzbeschreibung der Zeichnungen

Es zeigen:
- Figur 1:: eine schematische Darstellung eines Schiffspropellers bei Segelfahrt in a) Faltstellung b) Rekuperationsstellung,
- Figur 2:: eine schematische Darstellung einer seriellen Hybridanordnung als Hilfsantrieb einer Segelyacht gemäß dem Stand der Technik.

### Beschreibung bevorzugter Ausführungsformen

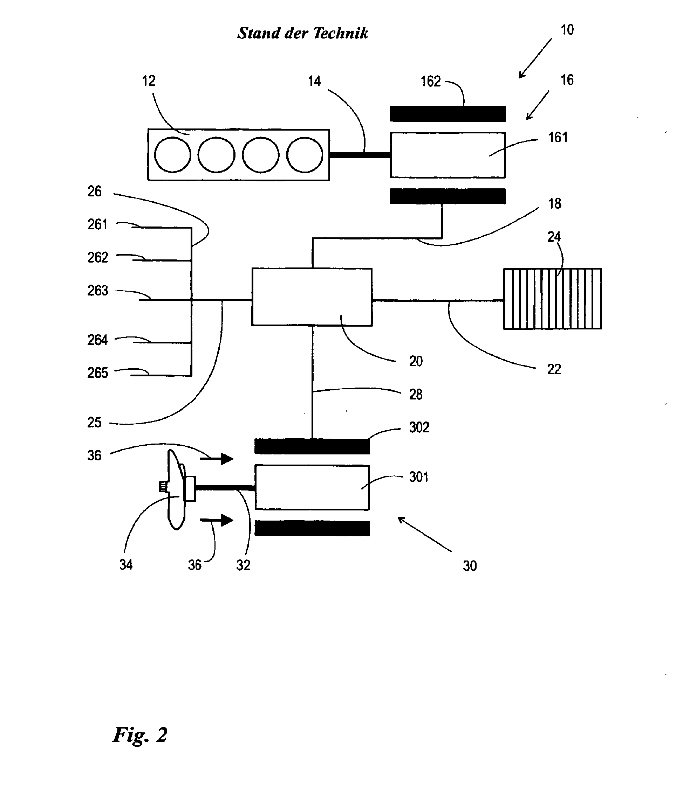

Figur 2 zeigt im Grunde bekannte Konzept des seriellen Hybridantriebs als Hilfsantriebsanordnung 10 einer Segelyacht. Die Anordnung enthält eine Verbrennungsmaschine, die insbesondere als Schiffsdiesel ausgebildet sein kann. Die Verbrennungsmaschine 12 ist über eine Antriebswelle 14 mit einer ersten elektrischen Maschine 16 gekoppelt. In der dargestellten Ausführungsform ist die erste elektrische Maschine 16 in Innenläufer-Bauform ausgebildet, wobei die Antriebswelle 14 einen Rotor 161 antreibt, der innerhalb eines schiffsfesten Stators 162 umläuft. Die spezielle Bauform der elektrischen Maschine 16 ist für die vorliegende Erfindung nicht erheblich. Insbesondere kann auch eine Außenläufer-Bauform eingesetzt werden. Unerheblich für die Erfindung ist weiter, ob die elektrische Maschine in Asynchron-, Permanentmagnet- oder Erregerstrom-Bauart, die grundsätzlich alle einsetzbar sind, ausgestaltet ist. Die erste elektrische Maschine 16 arbeitet vorwiegend als Generator. Die erzeugte elektrische Energie wird über eine elektrische Leitung 18 einer Leistungselektronik 20 zugeführt, die die weitere Verteilung der elektrischen Energie nach vorgegebenen Regeln steuert. Insbesondere ist die Leistungselektronik 20 über eine elektrische Leitung 22 mit einem elektrischen Energiespeicher 24 verbunden, der beispielsweise als Akkumulator, insbesondere als Bleiakkumulator ausgebildet sein kann. Um eine hohe Speicherkapazität des Akkumulators 24 zu gewährleisten, muss dieser vergleichsweise groß ausgebildet sein. Dies führt zu einem vergleichsweise hohen Gewicht. Vorteilhafterweise kann dieses Gewicht im Bereich des Yachtkiels angeordnet werden, wo es als zusätzlicher Ballast zur Stabilisierung des Schiffes wirkt. Bei dieser Bauform sollte jedoch darauf geachtet werden, dass ein wartungsfreier oder wenigstens wartungsarmer Akkumulator verwendet wird, da diese bevorzugte Position für Wartungsarbeiten typischerweise schwer erreichbar ist. Selbstverständlich ist es auch möglich, mehrere oder andere Energiespeicher zu verwenden.

Weiter ist die Leistungselektronik 20 über eine elektrische Leitung 25 mit einem Bordnetz 26 verbunden, welches in Figur 2 nur angedeutet ist. Das Bordnetz 26 enthält eine Mehrzahl von Anschlüssen, hier beispielhaft dargestellt als Anschlüsse 261 bis 265, für anschließbare Verbraucher. Bei einer speziellen Ausführungsform der Erfindung stellt das in Figur 2 dargestellte Bordnetz lediglich ein Teilnetz eines wenigstens zwei Teilnetze umfassenden Gesamtbordnetzes dar. Bei dieser Ausführungsform führt jedes der Teilnetze eine andere Spannung. Insbesondere kann für sicherheitsrelevante Verbraucher einer Niederspannung von 12 Volt und für Komfortverbraucher eine Hochspannung von mehreren 100 Volt vorgesehen sein.

Weiter ist die Leistungselektronik 20 über eine elektrische Leitung 28 mit einer zweiten elektrischen Maschine 30 verbunden. Bei der gezeigten Ausführungsform ist die zweite elektrische Maschine 30 ebenso wie die erste elektrische Maschine 16 als Innenläufer mit einem innen liegenden Rotor 301 und außen liegenden Stator 302 ausgebildet. Auch im Fall der zweiten elektrischen Maschine ist die spezielle Bauform jedoch für die Erfindung nicht von Bedeutung.

Über eine Abtriebswelle 32 ist die zweite elektrische Maschine 30 mit einem Schiffspropeller 34 gekoppelt. Die Richtungspfeile 36 symbolisieren in Figur 2 die Vortriebsrichtung des Propellers 34, d.h. diejenige Richtung, in der der Propeller bei Vorwärtsbetrieb (Rechtslauf bei sogenannten "Rechtspropellern", Linkslauf bei sogenannten "Linkspropellern") einen Schub ausübt. Selbstverständlich ist es möglich, mehrere Schiffspropeller 34 zu verwenden, wobei dies im Rahmen der Erfindung auch mit der Verwendung mehrerer zweiter elektrischer Maschinen 30 einhergehen kann.

Die zweite elektrische Maschine 30 ist sowohl im motorischen als auch im generatorischen Betrieb betreibbar. Im motorischen Betrieb wird die über zweite elektrische Maschine 30 die Leistungselektronik 20 mit elektrischer Energie versorgt und treibt den Propeller 34 zwecks Erzeugung eines Vortriebs der Yacht an. Bei Segelfahrt wird der Propeller 34 entgegen seiner vortriebsrichtung, d.h. entgegen den Richtungspfeilen 36 angeströmt und in Rotation versetzt. Diese Rotation überträgt sich über die Abtriebswelle 32 auf den Rotor 301 der zweiten elektrischen Maschine 30, an deren Stator 302 dann eine elektrische Leistung abgegriffen werden kann. Diese wird über die Leitung 28 der Leistungselektronik 20 zugeführt, die je nach Zustand der übrigen Elemente die Leistung dem Akkumulator 24 und/oder dem Bordnetz 26 zuführt.

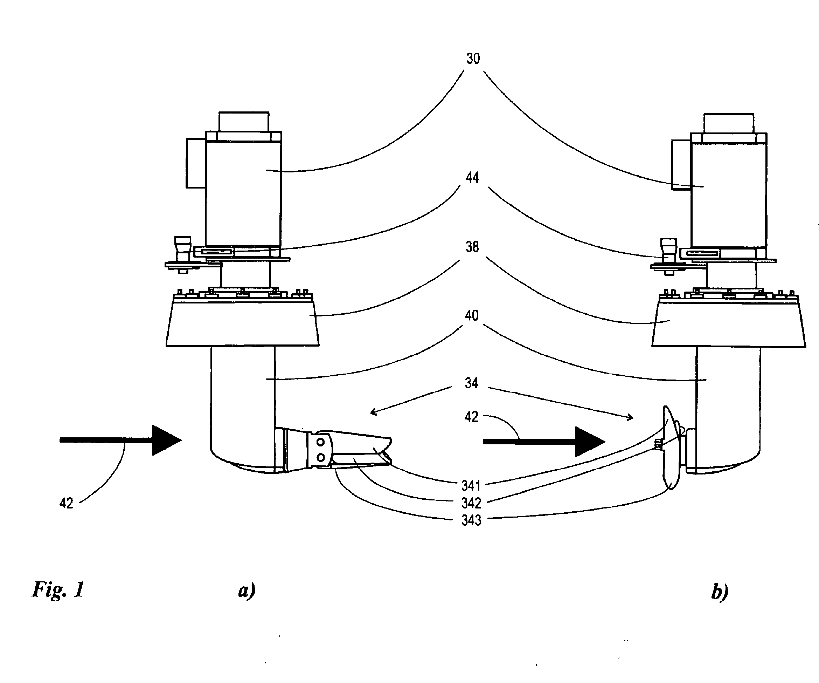

Figur 1 zeigt eine detaillierte, wenngleich noch immer schematische Darstellung einer Motor/Propellereinheit, bestehend aus einer elektrischen Maschine 30 und einem Propeller 34. Die Baueinheit wird mittels eines Flansches 38 an einem nicht dargestellten Ausleger der Segelyacht angeflanscht. Die Abtriebswelle, welche die elektrische Maschine 30 und den Propeller 34 verbindet, ist in einem Wellengehäuse 40 geführt.

Wenigstens der unterhalb des Flansches 38 gelegene Abschnitt der Einheit, der den Propeller 34 umfasst, ist um eine vertikale Achse um wenigstens 180° schwenkbar. Dies erlaubt die strömungstechnisch günstige Ausgestaltung des Propellers 34 als Faltpropeller, dessen Propellerblätter 341 bis 343 klappbar gelagert sind. Teilfigur 1a) zeigt die Motor/Propellereinheit in Normalstellung bei Segelbetrieb der Yacht. Dabei wird der Propeller 34 gemäß dem Richtungspfeil 42 angeströmt. Seine Propellerblätter 341 bis 343 klappen nach achtern weg. Hierdurch wird der Strömungswiderstand des Propellers 34 minimiert. Diese Einstellung eignet sich insbesondere bei Segelfahrt bei geringen Windstärken.

Bei höheren Windstärken, bei denen die über die Segel auf die Yacht wirkenden Windkräfte größer sind als zur Erzielung der gewünschten Geschwindigkeit und insbesondere zur Erzielung der maximalen Rumpfgeschwindigkeit erforderlich, kann der Propeller in die in Teilfigur 1b) gezeigte Stellung verschwenkt werden. Diese Stellung wird als Rekuperationsstellung bezeichnet. Der Propeller wird in dieser Stellung in seiner Vortriebsrichtung, d.h. entgegen der Klapprichtung der Propellerblätter 341 bis 343 eingeströmt. Hierdurch klappen die Propellerblätter 341 bis 343 auf und die durch den Richtungspfeil 42 angedeutete Anströmung kann effizient in Rotationsbewegung des Propellers 34 umgesetzt werden. In dieser Stellung ist die elektrische Maschine 30 auf Generatorbetrieb geschaltet. Die erzeugte elektrische Energie wird, wie oben beschrieben, der Leistungselektronik zugeführt und nutzbar gemacht.

Bei der Verschwenkung des Propellers 34 ist es unerheblich, ob lediglich der unterhalb des Flansches 38 gelegene Abschnitt der Motor/Propeller-Einheit verschwenkt wird (wie in Figur 1 dargestellt) oder ob auch die elektrische Maschine 30 mit rotiert wird. Bei der dargestellten Ausführungsform erfolgt die Verschwenkung über einen Riementrieb 44, der elektrisch, mechanisch oder manuell angesteuert werden kann.

Besonders bevorzugt ist der Propeller 34 um mehr als 180°, insbesondere um 360° oder sogar frei verschwenkbar. Eine solche Ausführungsform hat den Vorteil, dass die Verschwenkung über die Verstellung zwischen Normalstellung und Rekuperationsstellung hinaus bei Vorwärtsfahrt zur Unterstützung des Ruders genutzt werden kann. Um die normale, d.h. gerade Antriebstellung einerseits und die Rekuperationsrichtung anderseits leichter zu finden, können diese Stellungen durch Rastvorrichtungen markiert und dort vorzugsweise fixierbar sein.

Natürlich stellen die in den Figuren gezeigten und in der speziellen Beschreibung diskutierten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten anhand gegeben. Insbesondere ist die Anzahl der verwendeten Schiffspropeller, die spezielle Bauform der elektrischen Maschinen, die Gestaltung der Verbrennungsmaschine, die Art und Anzahl der Akkumulatoren und die speziellen Eigenschaften des Bordnetzes sowie der Leistungselektronik für die vorliegende Erfindung nicht von Bedeutung. Auch der Ort des Einbaus des oder der Schiffspropeller kann vom Fachmann variiert werden. Insbesondere ist denkbar, z.B. zwei seitliche Propeller und einen dritten Propeller unter dem Vorschiff vorzusehen. Hierdurch wird ein Bugstrahlruder entbehrlich. Diese Anordnung verbessert auch die Anströmung der Propeller im Rekuperationsbetrieb gegenüber einer Anordnung in der Wirbelschleppe hinter dem Kiel.

### Bezugszeichenliste

- 10: hybride Hilfsantriebsordnung
- 12: Verbrennungsmotor
- 14: Antriebswelle
- 16: erste elektrische Maschine
- 161: Läufer von 16
- 162: Stator von 16
- 18: elektrische Leitung
- 20: Leistungselektronik
- 22: elektrische Leitung
- 24: Akkumulator
- 25: elektrische Leitung
- 26: Bordnetz
- 261: Verbraucheranschluss von 26
- 262: Verbraucheranschluss von 26
- 263: Verbraucheranschluss von 26
- 264: Verbraucheranschluss von 26
- 265: Verbraucheranschluss von 26
- 28: elektrische Leitung
- 30: zweite elektrische Maschine
- 301: Rotor von 30
- 302: Stator von 30
- 32: Abtriebswelle
- 34: Propeller
- 341: Flügel von 34
- 342: Flügel von 34
- 343: Flügel von 34
- 36: Vortriebspfeil
- 38: Flansch
- 40: Gehäuse
- 42: Anströmungspfeil
- 44: Riementrieb

## Patentansprüche

1. Hybride Hilfsantriebsanordnung für eine Segelyacht, umfassend
- einen Verbrennungsmotor (12),
- eine mit einer ersten elektrischen Maschine (16) gekoppelte Leistungselektronik (20),
- einen mit der Leistungselektronik (20) verbundenen elektrischen Energiespeicher (24),
- eine mit der Leistungselektronik (20) verbundene und mit einem Schiffspropeller (34) gekoppelte, zweite elektrische Maschine (30), die sowohl motorisch als auch generatorisch betreibbar ist,
**dadurch gekennzeichnet, daß** die Hilfsantriebsanordnung eine von dem Verbrennungsmotor (12) antreibbare, vorwiegend generatorisch arbeitende, erste elektrische Maschine (16),
umfasst, und dass der Schiffspropeller als ein bei Propellerstillstand und Anströmung entgegen seiner Vortriebsrichtung selbsttätig zusammenklappender Faltpropeller (34) ausgebildet ist, der an einem Propellersockel (38, 40) angeordnet ist, welcher zwischen einer Antriebsstellung, in der der Faltpropeller bei Vorwärtsfahrt der Segelyacht entgegen seiner Vortriebsrichtung angeströmt wird, und einer um 180° verschwenkten Rekuperationsstellung, in der der Faltpropeller (34) bei Vorwärtsfahrt der Segelyacht in seiner Vortriebsrichtung angeströmt wird, um eine vertikale Sockelachse schwenkbar ist.

2. Hilfsantriebsanordnung nach Anspruch 1,
**dadurch gekennzeichnet,**
**dass** die zweite elektrische Maschine (30) in oder an dem Propellersockel (38, 40) festgelegt ist.

3. Hilfsantriebsanordnung nach einem der vorangehenden Ansprüche,
**dadurch gekennzeichnet,**
**dass** die Leistungselektronik (20) mit einem Bordnetz (26) verbunden ist, welches ein erstes Teilnetz einer ersten, niedrigeren Spannung und ein zweites Teilnetz einer zweiten, höheren Spannung aufweist.

4. Hilfsantriebsanordnung nach Anspruch 3,
**dadurch gekennzeichnet,**
**dass** an das erste Teilnetz sicherheitsrelevante elektrische Verbraucher angeschlossen sind.

5. Hilfsantriebsanordnung nach Anspruch 3,
**dadurch gekennzeichnet,**
**dass** an das zweite Teilnetz elektrische Komfortverbraucher angeschlossen sind.

## Claims

1. A hybrid auxiliary drive assembly for a sailing yacht, comprising
- an internal combustion engine (12),
- a power electronics unit (20) coupled to a first electric machine (16)
- an electric energy storage means (24) connected to the power electronics unit (20)
- a second electric machine (30) that is connected to the power electronics unit (20) and coupled to a marine propeller (34) and that can be operated in motor mode as well as in generator mode,
**characterized in that**
the hybrid auxiliary drive assembly comprises a first electric machine (16) that can be driven by the internal combustion engine (12) and operates mainly in generator mode, the marine propeller being designed as a folding propeller (34) that automatically folds together when the propeller is stationary and the inflow to the propeller is opposite to the direction of propulsion of the propeller, said propeller being arranged on a propeller mounting (38, 40) that can be pivoted around a vertical mounting axis between a drive position, in which the direction of inflow to the folding propeller is opposite to the propulsion direction of the propeller when the sailing yacht is moving forwards, and a recuperation position pivoted by 180° in which the inflow to the folding propeller (34) is in the propulsion direction of the propeller when the sailing yacht is moving forwards.

2. A hybrid auxiliary drive assembly according to Claim 1,
**characterized in that**
the second electric machine (30) is installed in or on the propeller mounting (38, 40).

3. A hybrid auxiliary drive assembly according to any of the preceding claims.
**characterized in that**
the power electronics unit (20) is connected to an on-board power supply system (26) that comprises a first sub-network carrying a first, lower voltage and a second sub-network carrying a second, higher voltage.

4. A hybrid auxiliary drive assembly according to Claim 3,
**characterized in that**
safety-relevant electric loads are connected to the first sub-network.

5. A hybrid auxiliary drive assembly according to Claim 3,
**characterized in that**
convenience loads are connected to the second sub-network.

## Revendications

1. Agencement d'entraînement auxiliaire hybride pour un voilier, comprenant :
- un moteur à combustion interne (12),
- un bloc d'alimentation électronique (20) couplé à une première machine électrique (16)
- un moyen de stockage d'énergie électrique (24) raccordé au bloc d'alimentation électronique (20)
- une deuxième machine électrique (30) raccordée au accordé au bloc d'alimentation électronique (20) et couplée à une hélice marine (34) et pouvant fonctionner en mode moteur ainsi qu'en mode générateur,
**caractérisé en ce que**
l'agencement d'entraînement auxiliaire hybride comprend une première machine électrique (16) pouvant être entraînée par le moteur à combustion interne (12) et fonctionne essentiellement en mode générateur, l'hélice marine étant conçue comme une hélice pliante (34) qui se plie automatiquement lorsqu'elle est stationnaire et que le flux contre l'hélice est opposé à la direction de la propulsion de l'hélice, ladite hélice étant disposée sur un support d'hélice (38, 40) qui peut tourner autour d'un axe de support vertical entre une position d'entraînement, dans laquelle la direction du flux contre l'hélice pliante est opposée à la direction de propulsion de l'hélice lorsque le voilier avance, et une position de récupération tournée à 180° dans laquelle le flux contre l'hélice pliante (34) est dans la direction de propulsion de l'hélice lorsque le voilier de croisière avance.

2. Agencement d'entraînement auxiliaire hybride selon la revendication 1,
**caractérisé en ce que**
la deuxième machine électrique (30) est installée dans ou sur le support d'hélice (38, 40).

3. Agencement d'entraînement auxiliaire hybride selon l'une quelconque des revendications précédentes,
**caractérisé en ce que**
le bloc d'alimentation électronique (20) est raccordé à un générateur d'électricité de bord (26) qui comprend un premier sous-réseau avec une première tension, plus basse, et un deuxième sous-réseau avec une deuxième tension, plus élevée.

4. Agencement d'entraînement auxiliaire hybride selon la revendication 3,
**caractérisé en ce que**
les unités électriques liées à la sécurité sont raccordées au premier sous-réseau.

5. Agencement d'entraînement auxiliaire hybride selon la revendication 3,
**caractérisé en ce que**
les prises de courant sont raccordées au deuxième sous-réseau.
